# EUROPÄISCHE PATENTANMELDUNG

(11) **EP 3 125 055 A1**
(43) Veröffentlichungstag der Anmeldung: **01.02.2017**
(21) Anmeldenummer: 15179231.4
(22) Anmeldetag: 31.07.2015
(51) Int. Cl.: G05B 19/4103

(54) **WERKZEUGFÜHRUNGSVERFAHREN FÜR ANEINANDERGRENZENDE FLÄCHEN**

(71) Anmelder: Siemens Aktiengesellschaft, 80333 München (DE)
(72) Erfinder: Hamm, Carsten, Dr., 91058 Erlangen (DE); Handeck, Jörg, 35428 Langgöns (DE)

(57) **Zusammenfassung**

Die Erfindung betrifft ein Werkzeugführungsverfahren (100) zur Bearbeitung von an einem Flächenübergang (24) aneinander grenzender Flächen (20, 30). Das Verfahren umfasst einen Schritt, in dem ein Polygonzuges (10) mit einer Mehrzahl an Stützstellen (12) und einer zugehörigen Annäherungskurve (16) bereitgestellt wird. In einem weiteren Schritt erfolgt ein Ermitteln eines mit dem Flächenübergang (24) korrespondierenden Merkmalspunktes (18). Anschließend wird ein Ergänzungselement (40) zum Ersatz eines Polygonzugabschnitts (14, 28) ermittelt, der dem Merkmalspunkt (18) gegenüberliegt.

## Beschreibung

Die Erfindung betrifft ein Verfahren zur Führung eines Werkzeugs in einer Werkzeugmaschine sowie ein dazu geeignetes Programm, eine entsprechende Steuereinheit und eine entsprechende Werkzeugmaschine.

Aus US 5,815,401 A ist ein Verfahren zur Steuerung eines Werkzeugs entlang einer Non-Uniform Rational B-Spline, kurz NURBS, in einer CNC-Maschine bekannt. Dabei werden aus den Konstruktionsdaten eines CAD-Systems NURBS abgeleitet, die durch eine numerische Steuereinheit interpretiert werden.

DE 103 22 342 A1 offenbart ein Verfahren zum Fräsen von Freiformflächen bekannt, bei dem ein Fräswerkzeug entlang einer Fräsbahn bewegt wird. Der Werkzeugkopf des eingesetzten Fräswerkzeugs weist einen größeren Radius auf als dessen Werkzeugschaft. Der Werkzeugkopf überragt die äußere Mantelfläche des Werkzeugschafts in seitlicher Richtung jedoch nicht. In einem ersten Durchgang wird mit einem Kugelfräser eine erste Fräsbahn erzeugt und in einem zweiten Durchgang eine zweite Fräsbahn mit dem Fräswerkzeug, dessen Werkzeugkopf einen größeren Radius als der Werkzeugschaft aufweist.

Die bekannten Verfahren haben den Nachteil, dass sie an den Übergängen unterschiedlicher Flächen keine zuverlässig hohe Fertigungspräzision gewährleisten können. Darüber hinaus erfordern die bekannten Verfahren mit erhöhter Fertigungspräzision eine hohe Anzahl an Bearbeitungsdurchgängen und einen beträchtlichen Arbeitsaufwand bei der manuellen Einstellung der Werkzeugmaschine. Es besteht Bedarf an einem Werkzeugführungsverfahren, das selbsttätig eine schnelle und präzise Fertigung von Werkstücken mit aneinandergrenzenden Flächensegmenten erlaubt.

Der Erfindung liegt die Aufgabe zugrunde, ein Verfahren bereitzustellen, dass die Nachteile aus dem Stand der Technik überwindet und neben einer präzisen, schnellen, und damit wirtschaftlichen Fertigung, durch niedrige Anforderungen an Hardware auch eine Aufrüstbarkeit bestehender Werkzeugmaschinen gewährleistet. Diese Aufgabenstellung wird durch das erfindungsgemäße Verfahren gelöst.

Im erfindungsgemäßen Werkzeugführungsverfahren wird ein Werkzeug einer Werkzeugmaschine zu einer Bearbeitung eines Werkstücks spanabhebend an diesem in einer Bearbeitungsrichtung entlanggeführt. Die beim Werkstück angestrebte Kontur weist eine Mehrzahl an Flächen auf, die aneinandergrenzen. Der Bereich, in dem die Flächen aneinandergrenzen, ist der Flächenübergang. Der Flächenübergang bildet an der Werkstückoberfläche eine Kurve aus und ist in einem Querschnitt im Wesentlichen punktförmig. In einem ersten Verfahrensschritt wird basierend auf CAD-Konstruktionsdaten der angestrebten Werkstückkontur ein Polygonzug bereitgestellt. Der Polygonzug umfasst eine Mehrzahl an Stützstellen, die durch dazwischenliegende Polygonzugabschnitte im Wesentlichen geradlinig miteinander verbunden sind. Ein derartiger Polygonzug ist dazu geeignet, als Befehlssatz für eine numerische Ansteuerung von Antriebsmitteln für das Werkzeug in der Werkzeugmaschine zu dienen. Zusätzlich wird eine Annäherungskurve bereitgestellt, die auf zumindest einen Teil der Stützstellen basierend den Polygonzug approximiert. Die Annäherungskurve ist stetig ausgebildet und damit knickfrei.

In einem weiteren Verfahrensschritt wird ein Merkmalspunkt ermittelt, der auf der Annäherungskurve liegt und mit dem Flächenübergang korrespondiert. Der Merkmalspunkt bildet damit die Stelle des Flächenübergangs auf der Annäherungskurve ab. In einem anschließenden Verfahrensschritt wird ein Ergänzungselement ermittelt, das in den Polygonzug eingefügt wird. Dadurch entsteht mit dem Ergänzungselement zumindest ein neuer Polygonzugabschnitt. Das Ergänzungselement kann als Ergänzungspunkt oder als Kurvenabschnitt, beispielsweise als Spline-Kurve, ausgebildet sein. Die jeweilige Ausprägung des Ergänzungselements ist dabei von einem Benutzer oder durch eine entsprechende Parametrierung des erfindungsgemäßen Verfahrens einstellbar. Insgesamt wird der Polygonzugabschnitt ersetzt, der dem Merkmalspunkt unmittelbar gegenüberliegt. Infolgedessen schmiegt sich der Verlauf des nunmehr mit dem Ergänzungselement modifizierten Polygonzugs enger an die angestrebte Werkstückkontur im Bereich des Flächenübergangs an und wird dafür genauer abgebildet.

Mit dem erfindungsgemäßen Verfahren wird eine höhere Konturtreue erreicht, so dass beim bearbeiteten Werkstück ein präziser Flächenübergang mit geringen Toleranzen vorliegt. Das beanspruchte Verfahren basiert nur auf Daten von Stützstellen, die sich im Bereich des zu ersetzenden Polygonzugabschnitts befinden. Auf eine Auswertung von weiter entfernt liegenden Stützstellen, die räumlich versetzt, also senkrecht zur Bearbeitungsrichtung liegen, kann verzichtet werden. Hierdurch erfordert das erfindungsgemäße Verfahren nur wenig Rechenleistung, die durch eine Steuereinheit der Werkzeugmaschine bereitzustellen ist. Darüber hinaus wird durch das Verfahren im Bereich des Flächenübergangs nur eine einzelne zusätzliche Stützstelle eingefügt, so dass die vorliegende Datenmenge nur vernachlässigbar geringfügig vergrößert wird. Ferner basiert das erfindungsgemäße Verfahren auf Algorithmen zur Erstellung und Modifikation der Annäherungskurve bzw. des Polygonzugs, die für andere Funktionen in Steuerungen von Werkzeugmaschinen ohnehin vorhanden sind. Die Implementierung des erfindungsgemäßen Verfahrens kann dadurch in einfacher Weise verwirklicht werden.

In einer bevorzugten Ausführungsform der Erfindung wird der Merkmalspunkt auf der Annäherungskurve mittels einer Multi-Resolution-Analyse, kurz MRA, ermittelt. Die MRA ermittelt in zuverlässiger Weise aus einem Polygonzug bzw. dessen Annäherungskurve das Vorliegen geometrischer Merkmale einer Kontur. Insbesondere werden Krümmungen oder Knicke von Flächen erkannt, die bei ihrer materialabhebenden Herstellung anfällig für Fertigungsfehler sind. Ferner gewährleistet eine MRA bereits basierend auf einer Annäherungskurve mit einer niedrigen Anzahl an Stützstellen eine zuverlässige Erkennung derartiger geometrischer Merkmale. Der Merkmalspunkt kann direkt durch die MRA als Punkt auf der Annäherungskurve des zu optimierenden Polygonzugs ermittelt werden. Alternativ kann der Merkmalspunkt auf der Annäherungskurve des zu optimierenden Polygonzugs auch durch Interpolation von Merkmalspunkten auf benachbarten Polygonzügen ermittelt werden. Die benachbarten Polygonzüge passieren dabei den gleichen Flächenübergang wie der zu optimierende Polygonzug und gehören zum gleichen geometrischen Merkmal. Infolgedessen kann das erfindungsgemäße Verfahren auch mit einem Stützstellen-Datensatz mit niedriger Auflösung durchgeführt werden. Hierdurch wird der Rechenaufwand im Verfahren weiter gesenkt und die Umsetzung des Verfahrens mit Steuereinheiten mit geringer Rechenleistung erleichtert. In einer besonders bevorzugten Ausführungsform der Erfindung erfolgt die Ermittlung des Ergänzungspunkts unter Einbeziehung von Konstruktionsdaten, beispielsweise aus einem CAD-System.

In einer weiteren bevorzugten Ausführungsform des beanspruchten Verfahrens, bei dem der Flächenübergang konkav ausgebildet ist, liegt der zu ersetzende Polygonzugabschnitt zwischen dem Flächenübergang und dem Merkmalspunkt. Dabei liegt das Ergänzungselement auf der Seite des zu ersetzenden Polygonzugabschnitts, die dem Flächenübergang zugewandt ist. Folglich liegt der zu ersetzende Polygonzugabschnitt auch zwischen dem Ergänzungselement und dem Merkmalspunkt. Durch diese Lage wird ein Scheitelpunkt des Polygonzugs näher an den Flächenübergang herangerückt. Hierdurch wird die erzielbare Fertigungspräzision weiter gesteigert.

In einer alternativen Ausführungsform der Erfindung, bei dem der Flächenübergang konvex ausgebildet ist, liegt der Merkmalspunkt zwischen dem zu ersetzenden Polygonzugabschnitt und dem Flächenübergang. Dabei liegt das Ergänzungselement auf der Seite des zu ersetzenden Polygonzugabschnitts, die dem Flächenübergang abgewandt ist. Folglich liegt der zu ersetzende Polygonzugabschnitt auch zwischen dem Merkmalspunkt und dem Ergänzungselement. Durch diese Lage wird ein Scheitelpunkt des Polygonzugs weiter vom Flächenübergang weggerückt. Infolgedessen wird die erzielbare Fertigungspräzision gesteigert.

Vorzugsweise ist das Ergänzungselement als Ergänzungspunkt ausgebildet und im Wesentlichen ein Scheitelpunkt einer Approximationskurve, die zwischen zwei Polygonzugabschnitten gebildet wird, die nicht aneinander angrenzen. Der Ergänzungspunkt kann dabei auf der Approximationskurve oder in deren Bereich liegen. Besonders bevorzugt verbindet die Approximationskurve die Polygonzugabschnitte, die benachbart zum zu ersetzenden Polygonzugabschnitt liegen. Weiter bevorzugt verbindet die Approximationskurve auf jeder Seite des zu ersetzenden Polygonzugabschnitts eine Mehrzahl von Polygonzugabschnitten. Eine derartige Approximationskurve liefert in einfacher und zuverlässiger Form einen Ergänzungspunkt, durch den der Polygonzug in besonderem Maß an die angestrebte Werkstückkontur angenähert wird.

Alternativ kann der Ergänzungspunkt auch gebildet werden, indem an jedem der Stützstellen des zu ersetzenden Polygonzugabschnitts jeweils ein Bezugspunkt auf jeder der aneinandergrenzenden Flächen ermittelt wird. An jedem Bezugspunkt wird die dort vorliegende Tangente zur jeweiligen Fläche in der Ebene der Bearbeitungsrichtung ermittelt. Durch die Stützstellen des zu ersetzenden Polygonzugs werden Parallelen zu den ermittelten Tangenten gezogen. Der Schnittpunkt der Parallelen bildet hierbei den Ergänzungspunkt. In einer bevorzugten Ausführungsform wird bei der Ermittlung des Ergänzungspunktes mindestens eine Eigenabmessung des Werkzeugs berücksichtigt. In einer weiter bevorzugten Ausführungsform der Erfindung ist die berücksichtigte Eigenabmessung des Werkzeugs dessen Fräserradius. Die Ermittlung des Ergänzungspunktes anhand von Tangenten der aneinandergrenzenden Flächen wird der Polygonzug noch näher an die angestrebte Werkstückkontur angenähert und die erzielbare Fertigungspräzision weiter erhöht.

In einer weiteren bevorzugten Ausführungsform des erfindungsgemäßen Verfahrens ist bei einem konkaven Flächenübergang der Abstand vom Ergänzungspunkt zum Flächenübergang geringer als der jeweilige Abstand zwischen der dem Merkmalspunkt nächstgelegenen zwei Stützstellen und dem Flächenübergang. Dadurch wird im Bereich des Flächenübergangs eine unpräzise Werkstückkontur vermieden. Die so erzielte Annäherung des Polygonzugs an den konkaven Flächenübergang stellt sicher, dass das erfindungsgemäße Verfahren bei jeder Ausgangssituation eine Verbesserung der Herstellungsgenauigkeit bewirkt. Das beanspruchte Verfahren ist somit robust und sicher. Auf eine Überwachung der Funktionstüchtigkeit des beanspruchten Verfahrens durch einen Benutzer kann verzichtet werden.

Alternativ ist bei einem konvexen Flächenübergang der Abstand vom Ergänzungspunkt zum Flächenübergang höher als der jeweilige Abstand zwischen der dem Merkmalspunkt nächstgelegenen zwei Stützstellen und dem Flächenübergang. Dadurch wird im Bereich des Flächenübergangs eine unpräzise Werkstückkontur vermieden. Die so erzielte Entfernung des Polygonzugs vom konvexen Flächenübergang stellt sicher, dass das erfindungsgemäße Verfahren bei jeder Ausgangssituation eine Verbesserung der Herstellungsgenauigkeit bewirkt. Das beanspruchte Verfahren ist somit robust und sicher. Auf eine Überwachung der Funktionstüchtigkeit des beanspruchten Verfahrens durch einen Benutzer kann verzichtet werden.

Des Weiteren kann im erfindungsgemäßen Verfahren mindestens eine der aneinandergrenzenden Flächen gewölbt sein. Der Flächenübergang zwischen zwei aneinandergrenzenden gewölbten Flächen ist geometrisch komplex und erfordert eine hochauflösende Werkzeugführung. Das erfindungsgemäße Verfahren basiert in einem Bearbeitungsdurchgang stets auf der Nutzung von Daten und Stützstellen in der unmittelbaren Umgebung des Flächenübergangs. Auf die Auswertung von zusätzlichen, weiter entfernt liegenden Stützstellen kann verzichtet werden. Das erfindungsgemäße Verfahren ist somit in der Lage, rekursionsfrei einen Polygonzug zu optimieren. Hierdurch ist das erfindungsgemäße Verfahren inhärent sicher gegen ein Eintreten in eine Endlosschleife. Das beanspruchte Verfahren weist somit eine niedrige Fehleranfälligkeit auf und kann auch auf Hardware mit niedriger Rechenleistung schnell durchgeführt werden. Insgesamt stellt das erfindungsgemäße Verfahren eine Möglichkeit zur Verfügung, auch in komplexen Anwendungsfällen wie gewölbten aneinandergrenzenden Flächen in einfacher Weise die erzielbare Fertigungspräzision zu erhöhen.

In einer besonders bevorzugten Ausführungsform der Erfindung erfolgt die Ermittlung des Ergänzungspunktes mittels eines nichtlinearen Gleichungssystems. Nichtlineare Gleichungssysteme sind dazu geeignet, komplexe geometrische Aufgabenstellungen kompakt abzubilden und können schnell und zuverlässig mit einer Vielzahl an Algorithmen gelöst werden. Derartige Algorithmen sind in Steuereinheiten von Werkzeugmaschinen bereits für andere Funktionen hinterlegt und damit ohne Weiteres vorhanden. Folglich kann das erfindungsgemäße Verfahren mit geringem Aufwand auf einer Werkzeugmaschine implementiert werden, die dazu geeignet ist, Konstruktionsdaten, beispielsweise aus einem CAD-System, abzufragen.

Ferner kann das erfindungsgemäße Verfahren einen zusätzlichen Verfahrensschritt umfassen, in dem nach dem Einfügen des Ergänzungspunktes mindestens eine Stützstelle im Polygonzug ermittelt, die von einem benachbarten Polygonzugabschnitt linear abhängig ist. An einer derartigen linear abhängigen Stützstelle bleibt die Richtung des Polygonzuges gleich. Die ermittelte linear abhängige Stützstelle wird anschließend aus dem Polygonzug entfernt bzw. gelöscht. Die Einsparung einer verzichtbaren linear abhängigen Stützstelle ermöglicht es, den Stützstellen-Datensatz kompakt zu halten und die Anzahl der Rechenoperationen zur Durchführung des Werkzeugführungsverfahrens zu verringern. Dadurch wird die Implementierung des erfindungsgemäßen Verfahrens auf Steuereinheiten mit geringer Rechenleistung weiter erleichtert.

In einer weiteren Ausführungsform des erfindungsgemäßen Verfahrens wird der Flächenübergang, in Bezug auf den der Polygonzug optimiert wird, durch einen Benutzer ausgewählt. Dies erfolgt beispielsweise durch eine Auswahl in einer CAD-Software, in der die angestrebte Kontur des Werkstücks definiert wird. Durch eine Auswahl des Benutzers kann so an einem Werkstück gezielt bestimmt werden, welcher Flächenübergang einer präzisen Fertigung bedarf. Flächenübergänge, die keine erhöhte Genauigkeit erfordern, können somit von der Optimierung ausgenommen werden, so dass das erfindungsgemäße Verfahren zielgerichtet anwendbar ist. Insbesondere auf Werkzeugmaschinen mit niedriger Rechenleistung ist es der Fertigungsgeschwindigkeit zuträglich, wenn Optimierungen in der Werkzeugführung lediglich auf die qualitativ kritischen Bereiche des Werkstücks beschränkt wird.

Darüber hinaus kann der Polygonzug auch eine Mehrzahl an Bearbeitungsgängen umfassen, die jeweils mindestens einen Merkmalspunkt aufweisen. Das erfindungsgemäße Verfahren kann damit auf Polygonzüge angewandt werden, die eine flächige zeilenförmige Bearbeitung eines Werkstücks darstellen. Das beanspruchte Verfahren optimiert hierbei bei jedem Passieren des Flächenübergangs durch das Werkzeug und verbessert somit die Herstellungsqualität des Flächenübergangs am gesamten Werkstück. Das erfindungsgemäße Verfahren ist durch seine Einfachheit und Kompaktheit performant durchführbar, so dass ohne Weiteres auch eine Vielzahl von aneinandergereihten Bearbeitungsgängen in einem Durchlauf verbessert werden kann. In einer weiteren bevorzugten Ausführungsform des beanspruchten Verfahrens, kann dieses auch als Teil eines CAD-Programms ausgeführt werden.

Die der Erfindung zugrundeliegende Aufgabe wird ferner durch ein Programm gelöst, das zum Ausgeben von Steuerbefehlen für mindestens ein Antriebsmittel einer Werkzeugmaschine ausgebildet ist. Das Programm ist zu einer Speicherung in einem Speicher der Steuereinheit der Werkzeugmaschine geeignet und kann auch mit einer Recheneinheit der Steuereinheit ausgeführt werden. Ferner ist das beanspruchte Programm dazu ausgebildet, mindestens eines der oben beschriebenen erfindungsgemäßen Verfahren umzusetzen und aus Basis dessen korrespondierende Steuerbefehle an das mindestens eine Antriebsmittel auszugeben.

Gleichermaßen wird die Aufgabe durch eine erfindungsgemäße Steuereinheit gelöst. Die erfindungsgemäße Steuereinheit umfasst einen Speicher und eine Recheneinheit und ist dazu geeignet, an Antriebsmittel einer Werkzeugmaschine Steuerbefehle zu senden. Die beanspruchte Steuereinheit ist ferner mit einem Programm versehen, das im Speicher gespeichert ist und mittels der Recheneinheit ausführbar ist. Dabei handelt es sich um ein Programm, das dazu ausgebildet ist, mindestens eines der erfindungsgemäßen Verfahren umzusetzen.

Die Aufgabenstellung, die der Erfindung zugrundeliegt, wird auch durch eine Werkzeugmaschine gelöst, die mindestens ein Antriebsmittel und eine oben skizzierte Steuereinheit umfasst. Die beanspruchte Werkzeugmaschine ist insgesamt dazu ausgebildet, mindestens eine Ausführungsform des erfindungsgemäßen Verfahrens umzusetzen und Werkstücke mit entsprechender Kontur herzustellen.

Die Erfindung wird im Folgenden anhand von einzelnen Ausführungsbeispielen in Figuren beschreiben. Im Einzelnen zeigt
- FIG 1: schematisch eine erste Ausführungsform des erfindungsgemäßen Verfahren in einem ersten Stadium;
- FIG 2: schematisch die erste Ausführungsform des erfindungsgemäßen Verfahrens in einem zweiten Stadium;
- FIG 3: schematisch eine zweite Ausführungsform des erfindungsgemäßen Verfahrens;
- FIG 4: schematisch eine dritte Ausführungsform des erfindungsgemäßen Verfahrens.

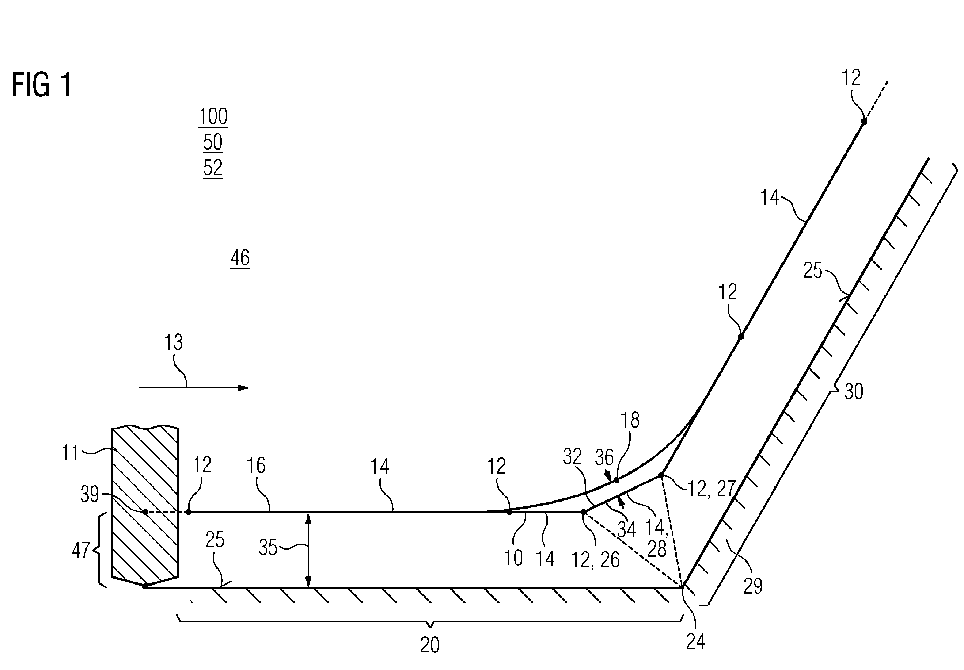

In FIG 1 ist schematisch eine erste Ausführungsform des erfindungsgemäßen Verfahrens 100 in einem ersten Stadium abgebildet. Das Verfahren 100 beruht auf einem Polygonzug 10, der eine Mehrzahl an Stützstellen 12 umfasst, die von einer nicht näher dargestellten Steuereinheit 52 einer Werkzeugmaschine 50 zur Verfügung gestellt wird. Der Polygonzug 10 setzt sich aus einzelnen Polygonzugabschnitten 14 zusammen, die jeweils zwei Stützstellen 12 miteinander im Wesentlichen geradlinig verbinden. Ferner ist der Polygonzug 10 mit seinen Stützstellen 12 in einem Abstand 35 von den Flächen 20, 30 angeordnet, der im Wesentlichen einer Länge 47 entspricht, über die sich das Werkzeug 11 ab einem Werkzeugbezugspunkt 39 erstreckt. Der Abstand 35 ist dabei mit der Toleranz beaufschlagt, die einer Bearbeitungstoleranz des Werkzeugs 11 entspricht. Die Flächen 20, 30 entsprechen in FIG 1 der angestrebten Kontur des Werkstücks 29. In einem Bearbeitungsdurchgang 46, bei dem ein Werkzeug 11 im Wesentlichen entlang einer Bearbeitungsrichtung 13 geführt wird um die Oberflächen 25 von zwei Flächen 20, 30 spanend zu bearbeiten. Die Flächen 20, 30 grenzen an einem konkaven Flächenübergang 24 aneinander, der am Werkstück 29 eine Kurve oder einen flächigen Bereich senkrecht zur Zeichnungsebene ausbildet. Der Flächenübergang 24 gemäß FIG 1 ist eine zweidimensionale Projektion des entsprechenden Bereichs des Werkstücks 29. Die durch den Flächenübergang 24 bedingte Richtungsänderung des Polygonzugs 10 wird durch das erfindungsgemäße Verfahren 100 optimiert, so dass im Bereich des Flächenübergangs 24 das Werkstück 29 eine erhöhte Fertigungspräzision aufweist.

Im erfindungsgemäßen Verfahren 100 wird eine Annäherungskurve 16 bereitgestellt, deren Berechnung auf den Stützstellen 12 basiert und die den Polygonzug 10 approximiert. Die Annäherungskurve 16 ist als Spline-Kurve ausgebildet, der Stützstellen 12 auch mit einer Abweichungstoleranz passiert. Die Annäherungskurve 16 liegt dabei zumindest teilweise auf einer Seite 32 des Polygonzugs 10, die dem Flächenübergang 24 abgewandt ist. Beim erfindungsgemäßen Verfahren 100 wird auf der Annäherungskurve 16 ein Merkmalspunkt 18 erkannt, der mit dem Flächenübergang 24 korrespondiert. Der Merkmalspunkt 18 wird durch eine Multi-Resolution-Analyse, kurz MRA, ermittelt und charakterisiert das Vorliegen eines Konstruktionsmerkmals, d.h. in FIG 1, des Flächenübergangs 24.

Der Merkmalspunkt 18 liegt gegenüber eines Polygonzugabschnitts 28, der von zwei Stützstellen 26, 27 begrenzt ist, die im Polygonzug 10, der von der nicht näher dargestellten Steuereinheit 52 bereitgestellt wird, dem Flächenübergang 24 am nächsten liegen. Im Bereich des Polygonzugabschnitts 28, der gegenüber dem Merkmalspunkt 18 liegt, liegt bei einem Abfahren des Polygonzugs 10 durch das Werkzeug 11 eine beträchtliche Abweichung von der angestrebten Kontur der Flächen 20, 30 vor. Das erfindungsgemäße Verfahren 100 ist dazu ausgebildet, durch Modifikation des Bereichs um den Polygonzugabschnitt 28 am Flächenübergang 24 die Fertigungspräzision zu erhöhen.

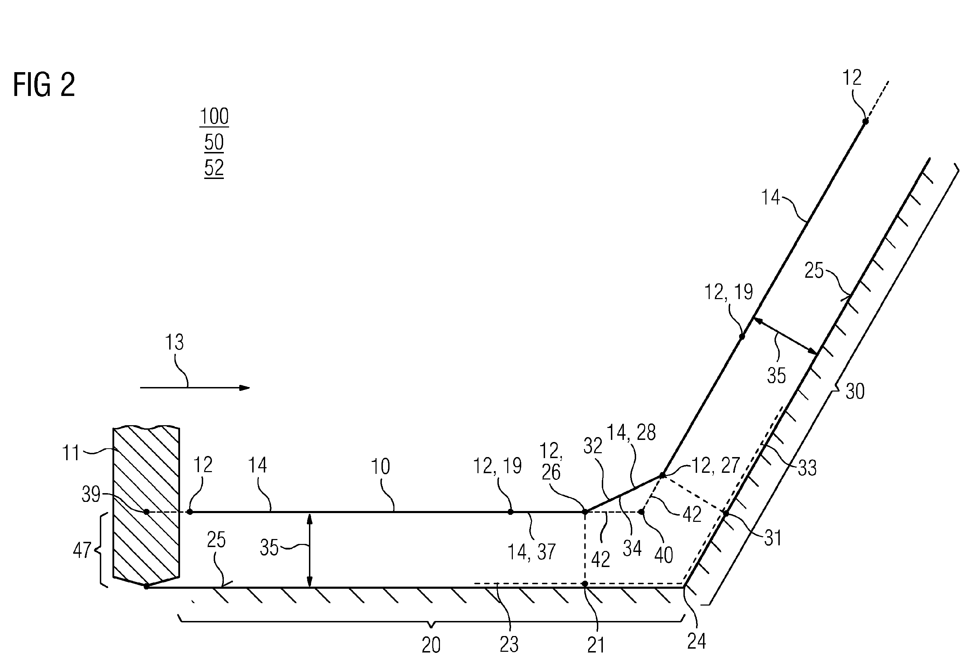

In FIG 2 ist schematisch die erste Ausführungsform der Erfindung in einem zweiten Stadium abgebildet. Der Aufbau gemäß FIG 2 korrespondiert im Wesentlichen mit dem Aufbau aus FIG 1. Der Polygonzug 10 mit den Stützstellen 12 bildet weiterhin den Pfad ab, der vom Werkzeug 11 entlang der Bearbeitungsrichtung 13 abzufahren ist um die Oberflächen 25 der Flächen 20, 30 spanend zu bearbeiten. Der Polygonzug 10 setzt sich aus den Polygonzugabschnitten 14 zusammen, die im Wesentlichen geradlinig die jeweils zwei Stützstellen 12 miteinander verbinden. Ferner ist der Polygonzug 10 in einem Abstand 35 angeordnet, der der Länge 47 entspricht, über die sich das Werkzeug 11 am dem Werkzeugbezugspunkt 39 erstreckt.

Im Bereich des Flächenübergangs 24 weist der Polygonzug 10 einen Ergänzungspunkt 40 auf, der im erfindungsgemäßen Verfahren 100 den Polygonzugabschnitt 28 ersetzt, der die Stützstellen 26, 27 umfasst, die dem Flächenübergang 24 am nächsten liegen. Der Ergänzungspunkt 40 wird dabei folgendermaßen ermittelt: An den Stützstellen 26, 27, die zum zu ersetzenden Polygonzugabschnitt 28 gehören, werden jeweils senkrecht zu den Flächen 20, 30 korrespondierende Flächenbezugspunkte 21, 31 ermittelt. Die Flächenbezugspunkte 21, 31 sind dabei jeweils die Punkte auf den Flächen 20, 30, die der jeweiligen Stützstelle 26, 27 am nächsten liegen. An den Flächenbezugspunkten 21, 31 werden die Tangenten 23, 33 zu den jeweiligen Flächen 20, 30 ermittelt. Die Tangenten 23, 33 liegen dabei in der vom Werkzeug 11 und der Bearbeitungsrichtung 13 definierten Ebene, Ausgehend von den Stützstellen 26, 27 werden die angrenzenden Polygonzugabschnitte 37, 38 mit je einem Verlängerungsabschnitt 42 versehen, der parallel zu der an dem zugehörigen Flächenbezugspunkt 21, 31 vorliegenden Tangente 23, 33 ist. Der Schnittpunkt der Verlängerungsabschnitte 42 an den benachbarten Polygonzugabschnitten 37, 38 bildet dabei den Ergänzungspunkt 40. Gemäß FIG 1 und 2 sind die Flächen 20, 30 im Wesentlichen eben, so dass die Verlängerungsabschnitte 42 geradlinige Fortsetzungen oder Verlängerungen der Polygonzugabschnitte 37, 38 sind, die neben dem zu ersetzenden Polygonzugabschnitt 28 liegen. Der Ergänzungspunkt 40 liegt dabei auf einer dem Flächenübergang 24 zugewandten Seite 34 des zu ersetzenden Polygonzugabschnitts 28. Das Werkzeug 11 folgt der angestrebten Kontur der Flächen 20, 30 somit enger als in FIG 1, so dass eine erhöhte Fertigungspräzision im Bereich des Flächenübergangs 24 erzielt wird.

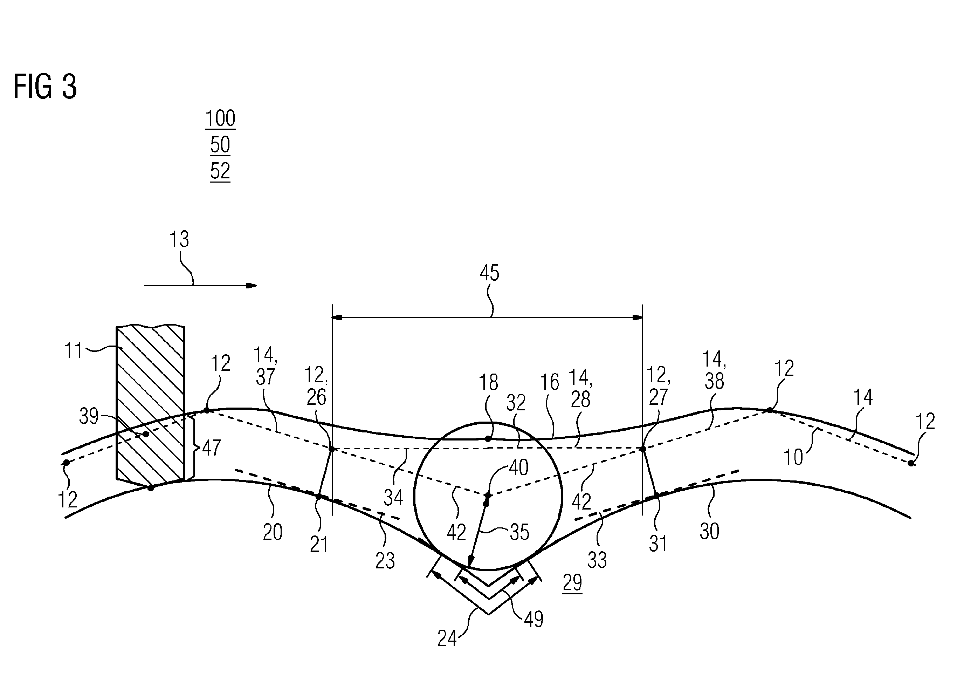

FIG 3 zeigt schematisch eine zweite Ausführungsform des erfindungsgemäßen Verfahren 100, bei dem der Polygonzug 10 mit den Stützstellen 12 von einer nicht näher dargestellten Steuereinheit 52 einer Werkzeugmaschine 50 bereitgestellt wird. Der Polygonzug 10 setzt sich aus einzelnen Polygonzugabschnitten 14 zusammen, die jeweils zwei Stützstellen 12 geradlinig miteinander verbinden. Ferner folgt der Polygonzug 10 im Wesentlichen der Oberfläche 25 von zwei Flächen 20, 30, die der angestrebten Kontur eines Werkstücks 29 entsprechen. Im erfindungsgemäßen Verfahren 100 wird eine Annäherungskurve 16 ermittelt, die den Polygonzug 10 approximiert. Die Annäherungskurve 16 ist als Spline-Kurve ausgebildet, der Stützstellen 12 mit einer Abweichungstoleranz passiert. Mittel einer Multi-Resolution-Analyse, kurz MRA, wird ein Merkmalspunkt 18 auf der Annäherungskurve 16 ermittelt. Der Merkmalspunkt 18 korrespondiert mit dem konkaven Flächenübergang 24 zwischen den aneinandergrenzenden Flächen 20, 30. Die Flächen 20, 30 sind gewölbt ausgebildet und bilden am Werkstück 29 einen flächigen Bereich. FIG 2 ist eine Projektion hiervon, so dass der Flächenübergang 24 in FIG 2 ein linienförmiger bzw. winkelförmiger Abschnitt an der Oberfläche 25 der Flächen 20, 30 ist. Der Merkmalspunkt 18, der durch die MRA ermittelt wird, zeigt den Bereich an, in dem der Flächenübergangs 24 vorliegt und befindet sich auf einer dem Flächenübergang 24 abgewandten Seite 32 eines gegenüberliegenden Polygonzugabschnitts 28. Der Polygonzugabschnitt 28 umfasst die Stützstellen 26, 27 des Polygonzugs 10, die dem Flächenübergang 24 am nächsten liegen. Bei einem Abfahren des zu ersetzenden Polygonzugabschnitts 28 hinterließe das Werkzeug 11 einen unbearbeiteten Abschnitt 45 auf den Flächen 20, 30, so dass der Flächenübergang 24 mit einer reduzierten Genauigkeit gefertigt würde.

Im Zuge des erfindungsgemäßen Verfahrens 100 wird dieser Polygonzugabschnitt 28 ersetzt durch ein Einfügen eines Ergänzungspunktes 40, der auf einer dem Flächenübergang 24 zugewandten Seite 34 des zu ersetzenden Polygonzugabschnitts 28 liegt. Zur Ermittlung der Position des Ergänzungspunktes 40 werden an den Stützstellen 26, 27 des zu ersetzenden Polygonzugabschnitts 28 zunächst jeweils ein Flächenbezugspunkt 21, 31 ermittelt. Die Flächenbezugspunkte 21, 31 sind jeweils die Punkte an den Flächen 20, 30, die den Stützstellen 26, 27 des zu ersetzenden Polygonzugabschnitts 28 am nächsten liegen. An den Flächenbezugspunkten 21, 31 wird jeweils eine Tangente 23, 33 zur jeweiligen Fläche 20, 30 ermittelt. Die Tangenten 23, 33 liegen dabei in der Ebene, die durch das Werkzeug 11 und die Bearbeitungsrichtung 13 definiert ist. Ferner werden die Polygonzugabschnitte 37, 38 die unmittelbar neben dem zu ersetzenden Polygonzugabschnitt 28 liegen, jeweils mit einem Verlängerungsabschnitt 42 versehen. Der Verlängerungsabschnitt 42 ist dabei parallel zur Tangente 23, 33 im korrespondierenden Flächenbezugspunkt 21, 31. Der Schnittpunkt der beiden Verlängerungsabschnitte 42 ist im erfindungsgemäßen Verfahren 100 der Ergänzungspunkt 40. Ferner ist der Ergänzungspunkt 40 von den Flächen 20, 30 jeweils in einem Abstand 35 angeordnet, der im Wesentlichen einer Länge 47 des Werkzeugs 11 entspricht, über die sich das Werkzeug 11 gemessen ab einem Werkzeugbezugspunkt 39 erstreckt. Durch das Setzen bzw. Einfügen des Ergänzungspunktes wird der zu ersetzende Polygonzugabschnitt 28 funktionslos ist löschbar. Der Ergänzungspunkt 40 lässt bei einem Abfahren des nunmehr modifizierten Polygonzugs 10 einen unbearbeiteten Abschnitt 49 an den Flächen 20, 30 zurück, der gegenüber dem unbearbeiteten Abschnitt 45 am ersetzten Polygonzugabschnitt 28 erheblich reduziert ist. Das erfindungsgemäße Verfahren 100 gemäß FIG 3 gewährleistet insgesamt am Werkstück 29 im Bereich des Flächenübergangs 24 eine gesteigerte Fertigungspräzision.

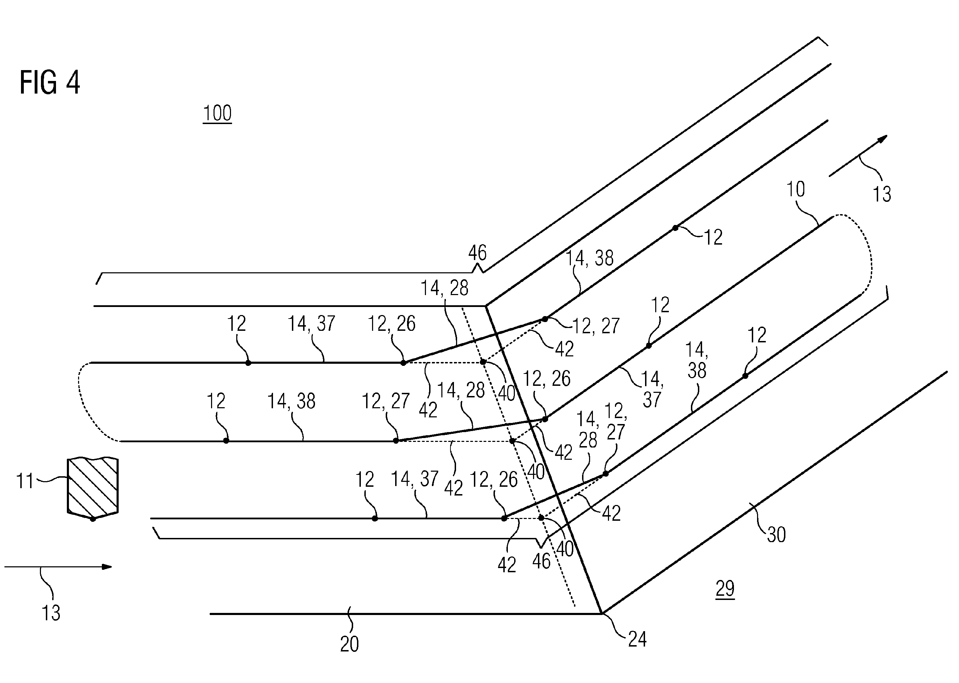

In FIG 4 ist eine dritte Ausführungsform des erfindungsgemäßen Verfahrens 100 abgebildet, in der eine Mehrzahl an Bearbeitungsdurchgängen 46 mit einem einzigen Polygonzug 10 durchgeführt wird. Das Werkzeug 11 fährt dabei den Polygonzug 10 entlang der Bearbeitungsrichtung 13 ab und passiert dabei eine Mehrzahl an Stellen eines einzigen konkaven Flächenübergangs 24 in unterschiedlichen Richtungen. Die aneinandergrenzenden Flächen 20, 30 sind im Wesentlichen eben, so dass der Flächenübergang 24 linienförmig ausgebildet ist. Wie in den Figuren 1 und 2 weist der Polygonzug 10 eine Mehrzahl an Stützstellen 12 auf, die paarweise Polygonzugabschnitte 14 begrenzen. Im Bereich des Flächenübergangs 24 liegt bei jedem Bearbeitungsdurchgang 46 ein Polygonzugabschnitt 28 vor, der von Stützstellen 26, 27 begrenzt ist, die jeweils am nächsten zum Flächenübergang 24 liegen. Die Polygonzugabschnitte 28 im Bereich des Flächenübergangs 24 werden nach einem Verfahren gemäß den Figuren 1 und 2 jeweils durch Ergänzungspunkte 40 an den Schnittpunkten von Verlängerungsabschnitten 42 ersetzt. Die Verlängerungsschnitte 42 verlängern benachbarte Polygonzugabschnitte 37, 38 im Wesentlichen geradlinig. Durch die wiederholte Anwendung des erfindungsgemäßen Verfahrens 100 wird somit entlang des Werkstücks 29 ein präzise gefertigter Flächenübergang 24 hergestellt.

## Patentansprüche

1. Werkzeugführungsverfahren (100) zur Bearbeitung von an einem Flächenübergang (24) aneinander grenzender Flächen (20, 30), umfassend die Schritte:
a) Bereitstellen eines Polygonzuges (10) mit einer Mehrzahl an Stützstellen (12) und einer zugehörigen Annäherungskurve (16) ;
b) Ermitteln eines mit dem Flächenübergang (24) korrespondierenden Merkmalspunktes (18);
c) Ermitteln eines Ergänzungselements (40) zum Ersatz eines Polygonzugabschnitts (14, 28), der dem Merkmalspunkt (18) gegenüberliegt.

2. Werkzeugführungsverfahren (100) nach Anspruch 1, **dadurch gekennzeichnet, dass** im Schritt b) der mit dem Flächenübergang (24) korrespondierende Merkmalspunkt (18) mittels einer Multi-Resolution-Analyse ermittelt wird.

3. Werkzeugführungsverfahren (100) nach Anspruch 1 oder 2, **dadurch gekennzeichnet, dass** der Flächenübergang (24) im Wesentlichen konkav ist, das Ergänzungselement (40) als Ergänzungspunkt (18) ausgebildet ist, und auf einer dem Flächenübergang (24) zugewandten Seite (34) des dem Merkmalspunkt (18) gegenüberliegenden Polygonzugabschnitts (14, 28) liegt.

4. Werkzeugführungsverfahren (100) nach Anspruch 1 oder 2, **dadurch gekennzeichnet, dass** der Flächenübergang (24) im Wesentlichen konvex ist, das Ergänzungselement (40) als Ergänzungspunkt (18) ausgebildet ist, und auf einer dem Flächenübergang (24) abgewandten Seite (34) des dem Merkmalspunkt (18) gegenüberliegenden Polygonzugabschnitts (14, 28) liegt.

5. Werkzeugführungsverfahren (100) nach einem der Ansprüche 1 bis 4, **dadurch gekennzeichnet, dass** das Ergänzungselement als Ergänzungspunkt (18) ausgebildet ist und im Wesentlichen ein Scheitelpunkt einer Approximationskurve zwischen zwei voneinander getrennten Polygonzugabschnitten (14) ist.

6. Werkzeugführungsverfahren (100) nach einem der Ansprüche 1 bis 4, **dadurch gekennzeichnet dass** das Ergänzungselement (18) ein Schnittpunkt von Verlängerungen von zwei voneinander getrennten Polygonzugabschnitten (14) ist.

7. Werkzeugführungsverfahren (100) nach einem der Ansprüche 1 bis 6, **dadurch gekennzeichnet, dass** der Ergänzungspunkt (18) unter Berücksichtigung einer Eigenabmessung eines Werkzeugs (11) ermittelt wird.

8. Werkzeugführungsverfahren (100) nach einem der Ansprüche 1 bis 7, **dadurch gekennzeichnet, dass** mindestens eine der aneinandergrenzenden Flächen (20, 30) gewölbt ist.

9. Werkzeugführungsverfahren (100) nach einem der Ansprüche 1 bis 8, **dadurch gekennzeichnet, dass** das Ermitteln des Ergänzungspunktes (18) mittels eines nichtlinearen Gleichungssystems erfolgt.

10. Werkzeugführungsverfahren (100) nach einem der Ansprüche 1 bis 9, **dadurch gekennzeichnet, dass** in einem weiteren Schritt d) eine linear abhängige Stützstelle (12, 19) des Polygonzuges (10) ermittelt und aus dem Polygonzug (10) gelöscht wird.

11. Werkzeugführungsverfahren (100) nach einem der Ansprüche 1 bis 10, **dadurch gekennzeichnet, dass** der Flächenübergang (24) von einem Benutzer ausgewählt wird.

12. Werkzeugführungsverfahren (100) nach einem der Ansprüche 1 bis 11, **dadurch gekennzeichnet, dass** der Polygonzug (10) eine Mehrzahl an Bearbeitungsgängen (46) umfasst, die jeweils mindestens einen Merkmalspunkt (18) umfassen.

13. Programm (80) zur Ausgabe von Steuerbefehlen an mindestens ein Antriebsmittel (52) einer Werkzeugmaschine (50), das in einer Steuereinheit (70) gespeichert ist, **dadurch gekennzeichnet, dass** das Programm (80) zur Ausführung mindestens eines der Werkzeugführungsverfahren (100) gemäß einem der Ansprüche 1 bis 12 ausgebildet ist.

14. Steuereinheit (70) für eine Werkzeugmaschine (50), umfassend einen Speicher und einer Recheneinheit, die dazu ausgebildet ist, Befehle an mindestens ein Antriebsmittel (52) der Werkzeugmaschine (50) auszugeben, **dadurch gekennzeichnet, dass** im Speicher ein Programm (80) gemäß Anspruch 13 ausführbar gespeichert ist.

15. Werkzeugmaschine (50) mit einem Werkzeug (11) und mindestens einem zugehörigen Antriebsmittel (52), **dadurch gekennzeichnet, dass** die Werkzeugmaschine (50) eine Steuereinheit (70) gemäß Anspruch 14 aufweist.
